# EUROPEAN PATENT SPECIFICATION

(11) **EP 4 267 887 B1**
(45) Date of publication and mention of the grant of the patent: **31.07.2024**
(21) Application number: 21839846.9
(22) Date of filing: 14.12.2021
(51) Int. Cl.: F24D 17/00, F24D 19/10, F24H 1/12, F24H 9/20, F24H 15/168, F24H 15/174, F24H 15/176, F24H 15/212, F24H 15/215, F24H 15/219, F24H 15/238, F24H 15/296, F24H 15/31, F24H 15/37, F24H 15/407, G05D 23/185

(54) **A TANKLESS WATER HEATER, A FACILITY MANAGEMENT SYSTEM, A METHOD FOR CONTROLLING A TANKLESS WATER HEATER AND A METHOD FOR OPERATING A FACILITY MANAGEMENT SYSTEM**
TANKLOSER WASSERERHITZER, ANLAGENVERWALTUNGSSYSTEM, VERFAHREN ZUR STEUERUNG EINES TANKLOSEN WASSERERHITZERS UND VERFAHREN ZUM BETRIEB EINES ANLAGENVERWALTUNGSSYSTEMS
CHAUFFE-EAU SANS RÉSERVOIR, SYSTÈME DE GESTION D'INSTALLATION, PROCÉDÉ DE COMMANDE D'UN CHAUFFE-EAU SANS RÉSERVOIR ET PROCÉDÉ DE FONCTIONNEMENT D'UN SYSTÈME DE GESTION D'INSTALLATION

(30) Priority: 22.12.2020 US 202017130228
(43) Date of publication of application: 01.11.2023
(73) Proprietor: Stiebel Eltron GmbH & Co. KG, 37603 Holzminden (DE)
(72) Inventor: NOLTE, Hubert, 37671 Höxter (DE); STIEBEL, Frank, West Hatfield, MA 01088 (US); GOLUEKE, Dominik, 37671 Höxter (DE); JANZEN, Alexander, 37671 Höxter (DE); PAEHLER, Stephan, 37603 Holzminden (DE); SCHIEFELBEIN, Kai, 37671 Höxter (DE)
(74) Representative: Eisenführ Speiser
(86) International application number: PCT/EP2021/085624
(87) International publication number: WO 2022/136018

(56) References cited:
- WO-A1-2012/167383
- DE-A1- 102008 014 161
- DE-U1- 202004 012 263
- US-A1- 2010 004 790
- US-A1- 2013 266 295

## Description

### FIELD OF THE INVENTION

The present invention relates to a tankless water heater, a facility management unit, a method for controlling a tankless water heater and a method for operating a facility management system to control at least two tankless water heaters of an object.

It is noted that citation or identification of any documents in this application is not an admission that such document is available as prior art to the present disclosure.

### BACKGROUND

Point of use water heaters, in particular tankless water heaters, also known as instantaneous water heaters are well known. For example DE 20 2004 012263 U1 describes a tankless water heater in a modular design. Said tankless water heater is equipped with an electronically controlled throttle valve to reduce the flow rate if the desired temperature rise to heat the water exceeds its heating capacity based on the amount of water flowing through the tankless water heater.

Known tankless water heaters can be suitable for installation in bathrooms, shower rooms, toilets or kitchens, for example. Any number of draw-off points can be connected. Possible consumers include bath tubs, showers, washbasins or kitchen sinks.

The water can be heated to a set temperature only on demand, which is to say during draw-off. The available volume of hot water can be affected by a flow rate often specified in the unit [l/min], a cold-water temperature often specified in the unit [°C], which is the cold-water inlet temperature of incoming water, a heating output often specified in the unit [kW] to heat the incoming water and a required hot-water temperature often specified in the unit [°C].

The heating capacity of known water heaters can be adequate for the required flow rate and desired temperature rise to accommodate the needs of the user if it has been properly sized. Known tankless water heaters and methods of controlling said tankless water heaters, however, in practice still have room for improvement.

Depending on the region, cold-water temperatures of incoming water can vary considerably in the different seasons. As a result, there can usually be a rather diverse temperature range of average cold-water temperature of incoming water during the different seasons, in particular, there can be a significant difference of cold-water temperatures of incoming water during winter season and summer season. For numerous applications, the tankless water heater can usually provide enough temperature rise during the summer season when the incoming water temperature is high. Often, however, the water heater cannot ensure a sufficient temperature rise during the winter season, in particular, when the incoming water temperature is significantly lower than during summer season.

During summer season the required load of the water heater can preferably be less than during winter season due to a higher cold-water temperature of incoming water at comparable flow rate. In multi apartment house, the simultaneous use of numerous tankless water heaters can preferably cause a problem in the electric supply of said multi apartment house.

DE 10 2008 014161 A1 discloses that the heater has a power limitation unit for adjusting a reduced rated output of the heater, and a dynamic power limitation unit. The dynamic power limitation unit has a counter that detects the operation of the heater, where the counter exhibits a limit value. The dynamic power limitation unit limits the power of the heater to a level, when the counter reaches the limit value. The dynamic power limitation unit is arranged such that the dynamic power limitation unit does not execute power limitation, when the counter does not reach the limit value. An independent claim is also included for a method for controlling an electrical flow heater.

US 2010/004790 A1 discloses a system for shifting energy demand from on-peak time windows to off-peak time windows by using hot water heater load shifting, while providing the end user with the level of service (i.e., availability of hot water) according to the user's customary use described by service quality criteria. The shift is accomplished by a controller located at the end user establishment and in communication with a central control server. The controller monitors local water heater upper and/or lower temperature and controls upper and/or lower water heater heating elements in accordance with a demand shift process commanded by the central control server. The controller may determine usage and remaining capacity for reporting back to the central control server. A volumetric capacity and usage determination is disclosed. The control server may select water heaters according to use patterns and/or measured capacity. One embodiment is adapted for use with existing water heaters without disrupting safety features of the existing water heater.

### SUMMARY

There is an approach for providing an improved tankless water heater, an improved facility management system, an improved method for controlling a tankless water heater and an improved method for operating a facility management system to control at least two tankless water heaters of an object. In particular, there is an improved solution to reduce disadvantages of known solutions. In particular, there is an approach for providing a solution that is capable of meeting the comfort expectations of users and simultaneously avoid tripping service breaker.

According to a first aspect of the present invention, a tankless water heater is suggested. The tankless water heater comprises a flow channel with a cold-water inlet pipe, a heating unit with a heating element configured to heat water flowing through the heating unit and a hot-water outlet pipe, and a control unit configured to control the tankless water heater. The control unit is configured to receive a power limitation signal of an external facility management system and to control a heating output of the heating element depending on the power limitation signal.

In particular, the control unit comprises a control circuit arrangement, which is coupled to the heating element for controlling the heating output. Preferably, the control circuit arrangement can generate a control signal depending on the power limitation signal and transmit said control signal to the heating element.

Preferably, the control unit is configured to reduce a target heating output necessary to control a desired temperature rise to a lower level depending on the power limitation signal. In particular, the control unit is configured to determine the target heating output. Particularly, the control circuit arrangement of the control unit can reduce the target heating output depending on the power limitation signal and determine the target heating output necessary to control a desired temperature rise.

A heating output of the tankless water heater can be significantly responsible for a power consumption of the tankless water heater.

Preferably, the tankless water heater can be connected to a power supply like an electric grid.

The term "external" describes that the facility management system is remote from the tankless water heater. Therefore, the facility management system can be a separate system, which is coupled to the control unit for transmitting signals.

In particular, the control unit can be configured to be coupled wirelessly to the external facility management system, in particular for receiving said power limitation signal.

Particularly, the power limitation signal is generated by the facility management system depending on operating information about simultaneously running tankless water heaters of an object. For example, the operating information can comprise information about a number of simultaneously running tankless water heaters or a total current power consumption of the simultaneously running tankless water heaters or both.

The total current power consumption can preferably be a sum of the current power consumptions of the simultaneously running tankless water heaters.

Preferably, the power limitation signal depends on the number of the simultaneously running tankless water heaters of the object. The power limitation signal can preferably depend on a ratio of the number of the simultaneously running tankless water heaters and a specified maximum number of the simultaneously running tankless water heaters.

Alternately or in addition, the power limitation signal depends on a total current power consumption of the simultaneously running tankless water heaters of the object. The power limitation signal can preferably depend on a ratio of the total current power consumption of the simultaneously running tankless water heaters of the object and a specified total maximum power consumption.

"Simultaneously running tankless water heaters" describes running tankless water heaters of the object. Preferably, the control units of the simultaneously running tankless water heaters of the object can be wirelessly coupled to the facility management system.

The term "object" can describe a single apartment house or a multi apartment house with a number of single households. Furthermore, it is to be understood that the term "object" can describe a number of a single apartment houses or a number multi apartment houses as well as a number of a single apartment houses and a number multi apartment houses. Each single apartment house and each single households of the multi apartment house can comprise one or more tankless water heaters. The tankless water heaters of one object can preferably be connected to the facility management system.

Preferably, the heating element is thermally coupled to the water. In particular, different heating elements can be used to heat the water. For example a bare wire heating element or a tubular heater can be used.

Preferably, the control unit can comprise a communication module. The communication module can preferably be or comprise a communication interface, operable to communicate wirelessly with the facility management unit, an external communication unit, a server, a cloud, a power relay or a mobile end device or another communication device. In particular, the communication module enables to have access via mobile end device from around the world and within their local network. For example, the communication module comprises a receiving interface circuit for receiving the power limitation signal or another signal. Preferably, the communication module can comprise a transmitter interface circuit for transmitting signals, in particular operating signals representing operating information to the facility management unit, an external communication unit, a server, a cloud, a power relay or a mobile end device or another communication device.

In particular, the control unit or the control circuit arrangement can comprise a processor and a computer readable memory storing instructions that, when executed by the processor, cause the control unit to control the heating output of the heating element depending on the power limitation signal. In particular, the control unit can receive as input the power limitation signal and provide as output a power setting to the heating element. In particular, the processor can generate a control signal depending on the power limitation signal.

Preferably, the computer readable memory can store a setting temperature set by a user via a user interface. Alternatively or in addition, the computer readable memory can store a setting heating output set by a user via a user interface. In particular, the control unit can be configured to control the heating output depending on the setting temperature or on the setting heating output and on the power limitation signal.

According to an embodiment, the control unit is configured to detect continuously a current heating output and to be coupled wirelessly to the external facility management system for sending a current heating output signal representing the current heating output of the heating element to the external facility management system.

In particular, the current heating output can be time averaged over a time interval. For example the current heating output can represent an average of heating outputs in a time interval, for example of five seconds.

According to an embodiment, the power limitation signal provides a dynamic maximum output value for a dynamic derating. Preferably, the dynamic maximum output value depends on the current operating information, preferably a total current power consumption of simultaneously running tankless water heaters or a number of simultaneously running tankless water heaters connected with the external facility management system. In particular, the dynamic derating can be started, when the total current power consumption of the object exceeds a specified total maximum power consumption or when number of simultaneously running tankless water heaters is higher than a specified maximum number of simultaneously running tankless water heaters.

In an advantageous embodiment of the tankless water heater, a cold-water temperature sensor is arranged at the cold-water inlet pipe and configured to measure a cold-water temperature of incoming water flowing through the cold-water inlet pipe, a flow sensor is configured to measure a flow rate of incoming water flowing through the cold-water pipe and a motor driven throttle valve is foreseen. The control unit is coupled to the cold-water temperature sensor, the flow sensor and the motor driven throttle valve and is configured to calculate a target heating output necessary to control a temperature rise depending on the flow rate and the cold-water temperature of the incoming water and to actively control the motor driven throttle valve to reduce the flow rate depending on the cold-water temperature of the incoming water if the target heating output is higher than a maximum heating output specified by the power limitation signal.

"Arranged at the cold-water inlet pipe" means that the cold-water temperature sensor could be mounted inside the cold-water inlet pipe or outside the cold-water inlet pipe. If it is mounted outside the cold-water inlet pipe this sensor is especially mounted on an outer surface of the cold-water inlet pipe. The cold-water temperature sensor can measure the temperature of incoming water prior to heating by said heating element.

In particular, the tankless water heater further comprises a hot-water temperature sensor arranged at the hot-water outlet pipe and configured to measure a hot-water temperature of outgoing water flowing through the hot-water pipe, wherein the control unit is coupled to the hot-water temperature sensor and is configured to control the motor driven throttle valve for actively controlling the flow rate further depending on the hot-water temperature of the outgoing water in order to assure a constantly accurate temperature delivery.

Preferably, the control unit is configured to control the heating element in order to keep a water temperature to a desired value while a current heating output and thus also a power consumption is reduced to a lower level.

"Arranged at the hot-water inlet pipe" means that the hot-water temperature sensor could be mounted inside the hot-water outlet pipe or outside the hot-water outlet pipe. If it is mounted outside the hot-water outlet pipe this sensor is especially mounted on an outer surface of the hot-water outlet pipe.

The term "temperature" can be associated with the physical temperature of a medium, in particular the temperature of water. The SI unit of temperature is Kelvin (K). In practice the most frequently unit is degree Celsius (°C) in Europe and degree Fahrenheit (°F) in the US. It is to be understood, that the cold-water temperature sensor and the hot-water temperature sensor measure temperatures and generate temperature signals as an output signal representing measured temperatures. For example, the hot-water temperature sensor can output a 2V DC signal when measuring a water temperature of 60 °C. Therefore, the temperature signal can be used for the input into the control unit or a temperature controller.

In particular, the maximum heating output specified by the power limitation signal can represented by the dynamic maximum output value.

In an advantageous embodiment of the tankless water heater, the control unit is configured to be coupled, in particular wirelessly, to a power relay remote from the tankless water heater to send an activation signal to the power relay for activating the power relay in response to the power limitation signal containing operating information about simultaneously running tankless water heaters in an object connected with the external facility management system to interrupt a power supply to another electricity consumer during a heating process of the tankless water heater.

"In response to the power limitation signal" means that the control unit is configured to activate the power relay depending on receiving the power limitation signal or depending on a flow rate reduction in response to the power limitation signal, wherein the flow rate can be reduced if the target heating output is higher than a maximum heating output specified by the power limitation signal. For example, if the reduced flow rate exceeds a defined value of more than 10 % of an initial flow rate the control unit sends the activation signal to the power relay to switch.

In particular, the control unit can be configured to send said activation signal depending on a total power consumption of simultaneous running tankless water heaters of the object or a number of simultaneous running tankless water heaters of the object.

According to an embodiment, the tankless water heater further comprising a metal housing enclosing the flow channel and the control unit, wherein the housing comprises a hole, in which a plastic plug is seated creating a communication window for a wireless communication between the control unit and the external facility management system.

According to a further aspect of the present invention, a facility management system for controlling at least two tankless water heaters of an object is suggested. The facility management system for controlling at least two tankless water heaters of an object comprises an intelligent measuring device configured to be coupled to control units of the at least two tankless water heaters and to continuously determine current operating information of the at least two tankless water heaters. The facility management unit further comprises a power management unit coupled with the intelligent measuring device configured to generate and to send a power limitation signal to the control units of the at least two tankless water heaters based on current operating information of the at least two tankless water heaters for controlling heating outputs of heating elements of the at least two tankless water heaters depending on the current operating information of the at least two tankless water heaters.

In particular, the power management unit can be wirelessly coupled with the intelligent measuring device.

Preferably, the power limitation signal can cause the control units to reduce a target heating output necessary to control a desired temperature rise to a lower level depending on the power limitation signal.

In particular, the power management unit is configured to receive the current operating information measured by the intelligent measuring device and to compare the current operating information with set thresholds. Preferably, if the current operating information exceeds said thresholds the power management unit generates and sends the power limitation signal to the control units of the at least two tankless water heaters.

In an advantageous embodiment of the facility management system, the current operating information comprise current power consumptions of the at least two tankless water heaters, wherein the intelligent measuring device is configured to determine a total current power consumption, wherein the power management unit is configured to generate the power limitation signal based on the total current power consumption.

For example, in a case of simultaneously heating of several tankless water heaters in the object a second parameter defined as a threshold declares a maximum total power consumption. If the current total power consumption of simultaneous running tankless water heaters exceeds said threshold the power management unit generates and sends the power limitation signal to the control units of the at least two tankless water heaters.

In an advantageous embodiment of the facility management system, the power management unit is configured to start dynamic deratings of the at least two tankless water heaters by sending the power limitation signal, which specifies a dynamic maximum output value, when said total current power consumption of the object exceeds a specified total maximum power consumption.

In an advantageous embodiment of the facility management system, the current operating information comprise a number of simultaneously running tankless water heaters of the at least two tankless water heaters, wherein the power management unit is configured to generate the power limitation signal based on the number of simultaneously running tankless water heaters of the at least two tankless water heaters.

For example, in a case of simultaneously heating of several tankless water heaters in the object a first parameter defined as a threshold declares a number of simultaneous running tankless water heaters. If the number of simultaneous running tankless water heaters exceeds said threshold the power management unit generates and sends the power limitation signal to the control units of the at least two tankless water heaters.

In an advantageous embodiment of the facility management system, the power management unit is configured to start dynamic deratings of the at least two tankless water heaters by sending the power limitation signal, which specifies a dynamic maximum output value, when said number of simultaneously running tankless water heaters is higher than a specified maximum number of simultaneously running tankless water heaters.

The power limitation of the tankless water heaters can preferably be dynamic and can depend on a continuous comparison between the maximum number of simultaneously running tankless water heaters as a threshold and an actual number of simultaneous running tankless water heaters or the total maximum power consumption as a threshold and an actual current total power consumption of simultaneous running tankless water heaters. Subsequently, the power limitation of the tankless water heaters can be readjusted dynamically, time and result dependent. It shall be achieved that the power limitation is always as low as possible in consideration of the specified total maximum power consumption or the maximum number of simultaneously running tankless water heaters, in order to achieve the lowest possible loss of comfort for the users.

Preferably, the intelligent measuring device can be configured to be coupled to electricity consumers of the object and to continuously determine a total current power consumption of the electricity consumers comprising said current power consumption of the at least two tankless water heaters.

According to an embodiment of the facility management system, the power management unit is cloud-based or server-based.

In particular, the communication between the power management unit, the intelligent measuring device and the control unit can be unidirectional or bidirectional.

According to a further aspect of the present invention, a method for controlling a tankless water heater having a heating unit with a heating element configured to heat water flowing through the heating unit and a control unit configured to control the tankless water heater is suggested.

The method comprises receiving a power limitation signal of an external facility management system and controlling a heating output of the heating element depending on the power limitation signal.

According to a further aspect of the present invention, a method for operating a facility management system to control at least two tankless water heaters of an object is suggested. The method comprises determining current operating information of the at least two tankless water heaters of the object, generating a power limitation signal depending on the current operating information and sending the power limitation signal to control units of the at least two tankless water heaters for controlling heating outputs of heating elements of the at least two tankless water heaters depending on the current operating information of the at least two tankless water heaters.

As to the advantages, preferred embodiments and details of these further aspects and their preferred embodiments, reference is made to the corresponding advantages, preferred embodiments and details described above.

Further advantages of the present invention will become apparent when reading the detailed description accompanied by the drawing.

### BRIEF DESCRIPTIONS OF THE DRAWINGS

Exemplary embodiments shall now be described with reference to the attached drawings, in which
- Fig. 1: shows a wireless controlled tankless water heater and
- Fig. 2: shows a facility management system.

### DETAILED DESCRIPTION

It is to be understood that the figures and descriptions have been simplified to illustrate elements that are relevant for a clear understanding of the present disclosure, while eliminating, for purposes of clarity, many other elements, which are conventional in this art. Those of ordinary skill in the art will recognize that other elements are desirable for implementing the present disclosure. However, because such elements are well known in the art, and because they do not facilitate a better understanding of the present disclosure, a discussion of such elements is not provided herein.

In the figures, elements with the same or comparable functions are indicated with the same reference numerals.

The present disclosure will now be described in detail on the basis of the exemplary embodiments.

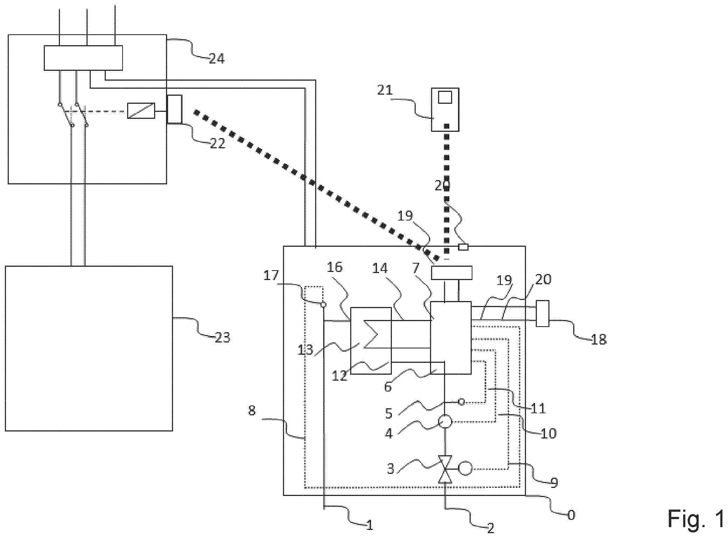

The following explains the concept of a tankless water heater with a wireless communication interface to a power relay (load shed relay) like shown in figure 1.

A tankless water heater 0 metal housing has an outgoing hot water port 1 and inbound water port 2 where the cold water supply is provided. A cold-water inlet pipe connects the inbound water port 2 and a heating unit. A hot-water outlet pipe connects the heating unit and the outgoing hot water port 1. The cold-water inlet pipe, the heating unit with a heating element configured to heat water flowing through the heating unit and the hot-water outlet pipe are parts of a flow channel of the tankless water heater 0.

For example, the outgoing water port 1 can be connected to a single or multiple shower heads to supply them with heated water. The shower heads are not shown in Figure 1.

Downstream of the inbound water port 2 at the cold-water inlet pipe there is a motor driven throttle valve 3, a flow sensor 4 and a cold-water temperature sensor 5 to measure the temperature of incoming cold water prior to heating. Downstream of the heating unit there is a hot-water temperature sensor 17 to measure the temperature of outgoing heated water. The motor driven throttle valve 3, the flow sensor 4, the cold-water temperature sensor 5 and the hot-water temperature sensor 17 are coupled to a control unit 7 of the tankless water heater. The control unit 7 can comprise an electronic control board and the motor driven throttle valve 3, the flow sensor 4, the cold-water temperature sensor 5 and the hot-water temperature sensor 17 can be coupled with the electronic control board via wires 8-11.

Not shown is the connection of the tankless water heater 0 to a power supply like an electric grid. For an electric tankless water heater a part of the cold-water inlet pipe 6 is required to cool the power triacs component of the electronic control board. The electronically controlled power triacs (not shown in Figure 1) can define the heating output of the tankless water heater necessary to control a desired temperature rise at different flow rates and different incoming water temperatures.

The shown heating unit comprises a heat exchanger vessel 13 and a heat exchanger 14. The incoming cold water enters at port 12 of the heat exchanger vessel 13 and is heated by the heat exchanger 14. The heat exchanger 14 can be a sheathed electric element or an electrically heated bare wire heating system. The heated water passes the vessel 13 and leaves at port 16. The temperature of the heated water is detected by the hot-water temperature sensor 17 to capture the temperature of the outgoing heated water, preferably based on a temperature set via a knob or push button below the display 18. The knob 18 is shown on the front casing in Figure 1.

It has been found useful if the tankless water heater 0 comprises a user interface receiving a user input, for example with regard to the set temperature value and providing the set temperature value to the control unit 7. The user interface can be a temperature set point device, for example. If necessary the installer of the tankless water heater can do a setup using the user interface, preferably the display push button, to declare specific thresholds or a maximum heating output.

An electronic communication module 19 is connected to the electronic control board 7 to communicate wirelessly with a an external communication device 21 remote from the tankless water heater 0. The external communication device can preferably be a smart phone, a tablet, an user interface unit, a facility management system or the power relay.

Due to the fact that the broadcasting process is suppressed by the metal housing of the heater, a plastic plug 20 seated in a hole in the metal housing in front of the communication module 19 creates a communication window to interrupt the effect of a Faraday cage in order to insure a proper communication between the external communication device 21 and the communication module 19.

During the winter season when the temperature of the incoming water declines, at a higher flow rate and required temperature rise, the heating capacity provided by the heater may be exceeded. The control unit 7 can automatically calculate steps for the throttle valve 3 to reduce the flow rate until the desired temperature rise is achieved at the maximum heat capacity the heater is able to provide. This ensures the comfort of a suitable flow rate even at low incoming water temperatures.

During the summer season when the incoming water temperature increases the desired temperature rise is smaller and the throttle valve 3 opens fully to provide the maximum flow rate.

Preferably information from the flow sensor 4, the activation of the throttle valve 3, and the firing rate of the triacs providing energy to the heating element are able to send an activation signal to a remote controlled power relay placed in a mains terminal to terminate the power supply to other electricity consumers in an apartment during the shower event.

If necessary the installer of the heater can do a setup using the display push button 18 to declare specific power threshold parameter. The power threshold values may depend on the current power usage of the water heater, and or on a defined period of time. The activation of the power relay may also depend on an event like the number of simultaneously running water heaters in a multi apartment house or the total current power consumption of the simultaneously running water heaters.

For example, a first parameter declares a first power rate. If the required heating output to heat up the water exceeds the first power rate the throttle valve 3 is closed slightly to reduce the flow rate while detecting the flow rate difference according to the sensor information of the flow sensor 4. The control unit 7 keeps the water temperature to the desired value while the power consumption is reduced to a lower level declared with the first parameter. If the flow restriction exceeds a defined value of more than 10 % of the former flow rate the communication module 19 sends a signal to the power relay 22 to switch.

In a case of simultaneously heating of several water heaters in a multi apartment building a second parameter declares a number of simultaneous running tankless water heaters. If the number of simultaneous running tankless water heaters exceeds the threshold of the second parameter the control unit 7 keeps the water temperature to the desired value while the power consumption is reduced to a lower level declared particularly with the first parameter. If the flow restriction exceeds a defined value of more than 10 % of the former flow rate the communication module 19 sends a signal to the power relay 22 to switch the power relay.

The power relay disconnects an electricity consumer 23 like a kitchen oven or a AC system temporarily from the power supply during a heating process of the tankless water heater to reduce the power demand of the single apartment to a defined threshold value. Once the shower event is done the power relay switches to activate the power supply to the electricity consumer 23. The power relay can be placed attached or close to the main terminal 24.

If a tankless water heater do not have a throttle valve 3 and is not connected to a power relay 22 the load shed can be performed in the following way. Alternativly, the following load shed can be additional to the method described above.

Each single tankless water heater of at least two tankless water heaters of an object like a multi apartment building can detect continuously the current heating output to heat up the water during a tapping event. In a case of simultaneously heating of several tankless water heaters in the object a second parameter defined by the installer of the water heater declares a number of simultaneous running wireless connected water heater. If the number of simultaneous running heater exceeds the threshold of the second parameter the control unit 7 reduces the current power consumption of all tankless water heaters by a factor declared with a third parameter. The third parameter can preferably be a derating parameter in percent of the current power consumption of each heater. If the value of the third parameter is for example 0,9 the current power consumption of each heater is reduced by 10 %. This ensures that the lack of comfort by the derating of the heater group is minimized.

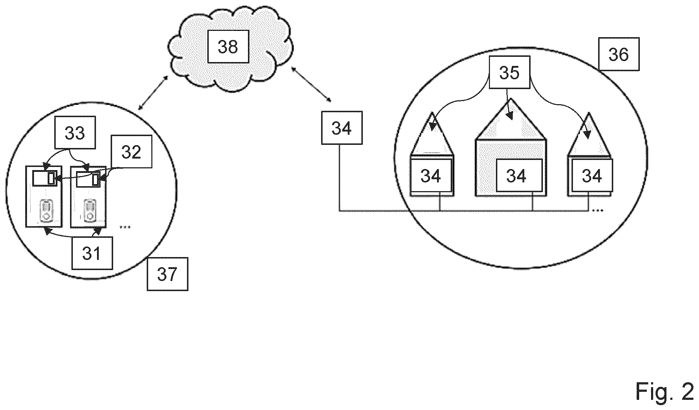

Figure 2 shows a facility management system. Electronic tankless water heaters 31 are equipped with a control unit 33 comprising a communication module 32. The communication module can be coupled wired or wireless with an control circuit arrangement of the control unit.

The electronic control unit 33 of the tankless water heater 31 can continuously detect the current heating output to heat up the water during a tapping event. The maximum power consumption can be determined, for example by a selected capacity, for units with selectable capacity, or by the available rated capacity, for units with fixed capacity.

An intelligent measuring device 34 can continuously detect the current power consumption of an object 35, 36.

All tankless water heaters installed in an object 35, 36 are combined to a virtual device cluster 37.

When the current power consumption of the object 35, 36 exceeds a defined threshold value, the dynamic derating process of the flow heaters starts. Subsequently, all simultaneous running tankless water heaters receive a power limitation signal from the server or the cloud 38 to limit the power by specifying a dynamic maximum output value.

The communication between the server or the cloud 38, intelligent measuring device 34 and communication module 32 can be uni- or bidirectional. Via the communication module 32, the control unit 33 of the tankless water heater 31 receives information about a maximum permissible actual power consumption.

When all simultaneous running tankless water heaters fall below the defined threshold value of the power consumption, the dynamic derating process can be terminated again.

## Claims

1. A tankless water heater (0, 31), comprising:
- a flow channel with a cold-water inlet pipe, a heating unit with a heating element configured to heat water flowing through the heating unit and a hot-water outlet pipe, and
- a control unit (7, 33) configured to control the tankless water heater (0, 31),
**characterized in that** the control unit (7, 33) is configured to receive a power limitation signal of an external facility management system and to control a heating output of the heating element depending on the power limitation signal.

2. The tankless water heater (0, 31) according to claim 1, wherein the control unit (7, 33) is configured to detect continuously a current heating output and to be coupled to the external facility management system for sending a current heating output signal representing the current heating output of the heating element to the external facility management system.

3. The tankless water heater (0, 31) according to claim 1, wherein the power limitation signal provides a dynamic maximum output value for a dynamic derating.

4. The tankless water heater (0, 31) according to claim 1, further comprising
- a cold-water temperature sensor (5) arranged at the cold-water inlet pipe and configured to measure a cold-water temperature of incoming water flowing through the cold-water inlet pipe,
- a flow sensor (4) configured to measure a flow rate of incoming water flowing through the cold-water pipe and
- a motor driven throttle valve (3),
wherein the control unit (7, 33) is coupled to the cold-water temperature sensor (5), the flow sensor (4) and the motor driven throttle valve (3) and is configured to calculate a target heating output necessary to control a temperature rise depending on the flow rate and the cold-water temperature of the incoming water and to actively control the motor driven throttle valve (3) to reduce the flow rate depending on the cold-water temperature of the incoming water if the target heating output is higher than a maximum heating output specified by the power limitation signal.

5. The tankless water heater (0, 31) according to claim 1, wherein the control unit (7, 33) is configured to be coupled, in particular wirelessly coupled, to a power relay remote from the tankless water heater (0) to send an activation signal to the power relay (22) for activating the power relay (22) in response to the power limitation signal containing operating information about simultaneously running tankless water heaters in an object (35, 36) connected with the external facility management system to interrupt a power supply to another electricity consumer (23) during a heating process of the tankless water heater (0).

6. The tankless water heater (0, 31) according to claim 1, comprising a metal housing enclosing the flow channel and the control unit (7, 33), wherein the housing comprises a hole, in which a plastic plug is seated creating a communication window for a wireless communication between the control unit (7, 33) and the external facility management system.

7. A facility management system for controlling at least two tankless water heaters (0, 31) of an object (35, 36), comprising
- an intelligent measuring device (34) configured to be coupled to control units (7, 33) of the at least two tankless water heaters and to continuously determine current operating information of the at least two tankless water heaters,
- a power management unit coupled with the intelligent measuring device (34) configured to generate and to send a power limitation signal to the control units (7, 33) of the at least two tankless water heaters based on the current operating information of the at least two tankless water heaters for controlling heating outputs of heating elements of the at least two tankless water heaters depending on the current operating information of the at least two tankless water heaters.

8. The facility management system according to claim 7, wherein the current operating information comprise current power consumptions of the at least two tankless water heaters, wherein the intelligent measuring device (34) is configured to determine a total current power consumption, wherein the power management unit is configured to generate the power limitation signal based on the total current power consumption.

9. The facility management system according to claim 8, wherein the power management unit is configured to start dynamic deratings of the at least two tankless water heaters by sending the power limitation signal, which specifies a dynamic maximum output value, when said total current power consumption of the object (35, 36) exceeds a specified total maximum power consumption.

10. The facility management system according to claim 7, wherein the current operating information comprise a number of simultaneously running tankless water heaters of the at least two tankless water heaters, wherein the power management unit is configured to generate the power limitation signal based on the number of simultaneously running tankless water heaters of the at least two tankless water heaters.

11. The facility management system according to claim 10, wherein the power management unit is configured to start dynamic deratings of the at least two tankless water heaters by sending the power limitation signal, which specifies a dynamic maximum output value, when said number of simultaneously running tankless water heaters is higher than a specified maximum number of simultaneously running tankless water heaters.

12. The facility management system according to claim 7, wherein the power management unit is cloud-based or server-based.

13. A method for controlling a tankless water heater (0, 31) having a heating unit with a heating element configured to heat water flowing through the heating unit and a control unit (7, 33) configured to control the tankless water heater (0, 31), the method **characterized by** comprising the following steps:
- receiving a power limitation signal of an external facility management system and
- controlling a heating output of the heating element depending on the power limitation signal.

14. A method for operating a facility management system to control at least two tankless water heaters of an object (35, 36), the method **characterized by** comprising the following steps:
- determining current operating information of the at least two tankless water heaters of the object (35, 36),
- generating a power limitation signal depending on the current operating information and
- sending the power limitation signal to control units (7, 33) of the at least two tankless water heaters for controlling heating outputs of heating elements of the at least two tankless water heaters depending on the current operating information of the at least two tankless water heaters.

## Patentansprüche

1. Durchlauferhitzer (0, 31), der Folgendes umfasst:
- einen Strömungskanal mit einem Kaltwassereinlassrohr, eine Heizeinheit mit einem Heizelement, das so konfiguriert ist, dass es durch die Heizeinheit strömendes Wasser erwärmt, und ein Warmwasserauslassrohr, und
- eine Steuereinheit (7, 33), die so konfiguriert ist, dass sie den Durchlauferhitzer (0, 31) steuert,
**dadurch gekennzeichnet, dass**
die Steuereinheit (7, 33) so konfiguriert ist, dass sie ein Leistungsbegrenzungssignal eines externen Gebäudemanagementsystems empfängt und eine Heizleistung des Heizelements in Abhängigkeit von dem Leistungsbegrenzungssignal steuert.

2. Durchlauferhitzer (0, 31) nach Anspruch 1, wobei die Steuereinheit (7, 33) so konfiguriert ist, dass sie kontinuierlich eine aktuelle Heizleistung erfasst und mit dem externen Gebäudemanagementsystem gekoppelt ist, um ein aktuelles Heizleistungssignal, dass die aktuelle Heizleistung des Heizelements darstellt, an das externe Gebäudemanagementsystem zu senden.

3. Durchlauferhitzer (0, 31) nach Anspruch 1, wobei das Leistungsbegrenzungssignal einen dynamischen maximalen Ausgangswert für ein dynamisches Derating bereitstellt.

4. Durchlauferhitzer (0, 31) nach Anspruch 1, ferner umfassend
- einen Kaltwassertemperatursensor (5), der an der Kaltwassereinlassleitung angeordnet und so konfiguriert ist, dass er die Kaltwassertemperatur des durch die Kaltwassereinlassleitung fließenden einströmenden Wassers misst,
- einen Durchflusssensor (4), der so konfiguriert ist, dass er die Durchflussmenge des durch das Kaltwassereinlassrohr fließenden einströmenden Wassers misst, und
- ein motorgetriebenes Drosselventil (3),
wobei die Steuereinheit (7, 33) mit dem Kaltwassertemperatursensor (5), dem Durchflusssensor (4) und dem motorgetriebenen Drosselventil (3) gekoppelt und so konfiguriert ist, dass sie eine Soll-Heizleistung berechnet, die erforderlich ist, um einen Temperaturanstieg in Abhängigkeit von der Durchflussrate und der Kaltwassertemperatur des einströmenden Wassers zu steuern, und dass sie das motorgetriebene Drosselventil (3) aktiv steuert, um die Durchflussrate in Abhängigkeit von der Kaltwassertemperatur des einströmenden Wassers zu verringern, wenn die Soll-Heizleistung höher ist als eine maximale Heizleistung, die durch das Leistungsbegrenzungssignal festgelegt ist.

5. Durchlauferhitzer (0, 31) nach Anspruch 1, wobei die Steuereinheit (7, 33) so konfiguriert ist, dass sie mit einem vom Durchlauferhitzer (0) entfernten Leistungsrelais gekoppelt, insbesondere drahtlos gekoppelt ist, um ein Aktivierungssignal an das Leistungsrelais (22) zu senden, um das Leistungsrelais (22) als Reaktion auf das Leistungsbegrenzungssignal, das Betriebsinformationen über gleichzeitig laufende Durchlauferhitzer in einem mit dem externen Gebäudemanagementsystem verbundenen Objekt (35, 36) enthält, zu aktivieren, um eine Stromzufuhr zu einem anderen Stromverbraucher (23) während eines Heizvorgangs des Durchlauferhitzers (0) zu unterbrechen.

6. Durchlauferhitzer (0, 31) nach Anspruch 1, mit einem Metallgehäuse, das den Strömungskanal und die Steuereinheit (7, 33) umschließt, wobei das Gehäuse ein Loch aufweist, in dem ein Kunststoffstopfen sitzt, der ein Kommunikationsfenster für eine drahtlose Kommunikation zwischen der Steuereinheit (7, 33) und dem externen Gebäudemanagementsystem bildet.

7. Gebäudemanagementsystem zur Steuerung von mindestens zwei Durchlauferhitzern (0, 31) eines Objekts (35, 36), umfassend
- eine intelligente Messvorrichtung (34), die so konfiguriert ist, dass sie mit Steuereinheiten (7, 33) der mindestens zwei Durchlauferhitzer gekoppelt ist und kontinuierlich aktuelle Betriebsinformationen der mindestens zwei Durchlauferhitzer bestimmt,
- eine mit der intelligenten Messvorrichtung (34) gekoppelte Leistungsverwaltungseinheit, die so konfiguriert ist, dass sie auf der Grundlage der aktuellen Betriebsinformationen der mindestens zwei Durchlauferhitzer ein Leistungsbegrenzungssignal erzeugt und an die Steuereinheiten (7, 33) der mindestens zwei Durchlauferhitzer sendet, um die Heizleistungen der Heizelemente der mindestens zwei Durchlauferhitzer in Abhängigkeit von den aktuellen Betriebsinformationen der mindestens zwei Durchlauferhitzer zu steuern.

8. Gebäudemanagementsystem nach Anspruch 7, wobei die aktuellen Betriebsinformationen aktuelle Leistungsverbräuche der mindestens zwei Durchlauferhitzer umfassen, wobei die intelligente Messvorrichtung (34) so konfiguriert ist, dass sie einen gesamten aktuellen Leistungsverbrauch bestimmt, wobei die Leistungsmanagementeinheit so konfiguriert ist, dass sie das Leistungsbegrenzungssignal basierend auf dem gesamten aktuellen Leistungsverbrauch erzeugt.

9. Gebäudemanagementsystem nach Anspruch 8, wobei die Energieverwaltungseinheit so konfiguriert ist, dass sie dynamische Leistungsreduzierungen der mindestens zwei Durchlauferhitzer startet, indem sie das Leistungsbegrenzungssignal sendet, das einen dynamischen maximalen Ausgangswert spezifiziert, wenn die gesamte aktuelle Leistungsaufnahme des Objekts (35, 36) eine spezifizierte maximale Gesamtleistungsaufnahme überschreitet.

10. Gebäudemanagementsystem nach Anspruch 7, wobei die aktuellen Betriebsinformationen eine Anzahl von gleichzeitig laufenden Durchlauferhitzern der mindestens zwei Durchlauferhitzer umfassen, wobei die Energieverwaltungseinheit so konfiguriert ist, dass sie das Leistungsbegrenzungssignal auf der Grundlage der Anzahl der gleichzeitig laufenden Durchlauferhitzer der mindestens zwei Durchlauferhitzer erzeugt.

11. Gebäudemanagementsystem nach Anspruch 10, wobei die Energieverwaltungseinheit so konfiguriert ist, dass sie dynamische Deratings der mindestens zwei Durchlauferhitzer startet, indem sie das Leistungsbegrenzungssignal sendet, das einen dynamischen maximalen Ausgangswert spezifiziert, wenn die Anzahl der gleichzeitig laufenden Durchlauferhitzer höher ist als eine spezifizierte maximale Anzahl von gleichzeitig laufenden Durchlauferhitzern.

12. Gebäudemanagementsystem nach Anspruch 7, wobei die Energieverwaltungseinheit cloud- oder serverbasiert ist.

13. Verfahren zum Steuern eines tanklosen Wassererhitzers (0, 31) mit einer Heizeinheit mit einem Heizelement, das so konfiguriert ist, dass es durch die Heizeinheit fließendes Wasser erhitzt, und einer Steuereinheit (7, 33), die so konfiguriert ist, dass sie den Durchlauferhitzer (0, 31) steuert, wobei das Verfahren **dadurch gekennzeichnet ist, dass** es die folgenden Schritte umfasst:
- Empfangen eines Leistungsbegrenzungssignals von einem externen Gebäudemanagementsystem und
- Steuern einer Heizleistung des Heizelements in Abhängigkeit von dem Leistungsbegrenzungssignal.

14. Verfahren zum Betreiben eines Gebäudemanagementsystems zur Steuerung von mindestens zwei Durchlauferhitzern eines Objekts (35, 36), wobei das Verfahren **dadurch gekennzeichnet ist, dass** es die folgenden Schritte umfasst:
- Ermitteln von aktuellen Betriebsinformationen der mindestens zwei Durchlauferhitzer des Objekts (35, 36),
- Erzeugen eines Leistungsbegrenzungssignals in Abhängigkeit von der aktuellen Betriebsinformation und
- Senden des Leistungsbegrenzungssignals an Steuereinheiten (7, 33) der mindestens zwei Durchlauferhitzer zum Steuern von Heizleistungen von Heizelementen der mindestens zwei Durchlauferhitzer in Abhängigkeit von den aktuellen Betriebsinformationen der mindestens zwei Durchlauferhitzer.

## Revendications

1. Un chauffe-eau instantané (0, 31), comprenant :
- un canal d'écoulement avec un tuyau d'entrée d'eau froide, une unité de chauffage avec un élément chauffant configuré pour chauffer l'eau circulant à travers l'unité de chauffage et un tuyau de sortie d'eau chaude, et
- une unité de contrôle (7, 33) configurée pour contrôler le chauffe-eau instantané (0, 31),
**caractérisé par le fait que** l'unité de commande (7, 33) est configurée pour recevoir un signal de limitation de puissance d'un système de gestion d'installation externe et pour commander une sortie de chauffage de l'élément chauffant en fonction du signal de limitation de puissance.

2. Le chauffe-eau instantané (0, 31) selon la revendication 1, dans lequel l'unité de commande (7, 33) est configurée pour détecter en continu une puissance de chauffage actuelle et pour être couplée au système de gestion d'installation externe afin d'envoyer un signal de puissance de chauffage actuelle représentant la puissance de chauffage actuelle de l'élément chauffant au système de gestion d'installation externe.

3. Le chauffe-eau instantané (0, 31) selon la revendication 1, dans lequel le signal de limitation de puissance fournit une valeur de sortie maximale dynamique pour un déclassement dynamique.

4. Le chauffe-eau instantané (0, 31) selon la revendication 1, comprenant en outre
- un capteur de température d'eau froide (5) placé sur le tuyau d'entrée d'eau froide et configuré pour mesurer la température d'eau froide de l'eau entrant dans le tuyau d'entrée d'eau froide,
- un capteur de débit (4) configuré pour mesurer le débit de l'eau entrant dans le tuyau d'eau froide, et
- une vanne d'étranglement motorisée (3),
dans lequel l'unité de commande (7, 33) est couplée au capteur de température d'eau froide (5), au capteur de débit (4) et à la vanne d'étranglement motorisée (3) et est configurée pour calculer une puissance de chauffage cible nécessaire pour contrôler une augmentation de température en fonction du débit et de la température de l'eau froide de l'eau entrante et pour contrôler activement la vanne d'étranglement motorisée (3) afin de réduire le débit en fonction de la température de l'eau froide de l'eau entrante si la puissance de chauffage cible est supérieure à une puissance de chauffage maximale spécifiée par le signal de limitation de la puissance.

5. Le chauffe-eau instantané (0, 31) selon la revendication 1, dans lequel l'unité de commande (7, 33) est configurée pour être couplée, en particulier sans fil, à un relais de puissance éloigné du chauffe-eau instantané (0) pour envoyer un signal d'activation au relais de puissance (22) pour activer le relais de puissance (22) en réponse au signal de limitation de puissance contenant des informations de fonctionnement sur les chauffe-eau instantanés fonctionnant simultanément dans un objet (35, 36) connecté au système de gestion des installations externes pour interrompre l'alimentation électrique d'un autre consommateur d'électricité (23) pendant un processus de chauffage du chauffe-eau instantané (0).

6. Le chauffe-eau instantané (0, 31) selon la revendication 1, comprenant un boîtier métallique entourant le canal d'écoulement et l'unité de contrôle (7, 33), dans lequel le boîtier comprend un trou, dans lequel un bouchon en plastique est placé, créant une fenêtre de communication pour une communication sans fil entre l'unité de contrôle (7, 33) et le système de gestion externe de l'installation.

7. Système de gestion des installations permettant de contrôler au moins deux chauffe-eau instantanés (0, 31) d'un objet (35, 36), comprenant
- un dispositif de mesure intelligent (34) configuré pour être couplé aux unités de commande (7, 33) des au moins deux chauffe-eau instantanés et pour déterminer en permanence les informations de fonctionnement actuelles des au moins deux chauffe-eau instantanés,
- une unité de gestion de la puissance couplée au dispositif de mesure intelligent (34) configurée pour générer et envoyer un signal de limitation de la puissance aux unités de commande (7, 33) des au moins deux chauffe-eau instantanés sur la base des informations de fonctionnement actuelles des au moins deux chauffe-eau instantanés pour contrôler les puissances de chauffage des éléments chauffants des au moins deux chauffe-eau instantanés en fonction des informations de fonctionnement actuelles des au moins deux chauffe-eau instantanés.

8. Le système de gestion des installations selon la revendication 7, dans lequel les informations de fonctionnement actuelles comprennent les consommations d'énergie actuelles des au moins deux chauffe-eau instantanés, dans lequel le dispositif de mesure intelligent (34) est configuré pour déterminer une consommation d'énergie totale actuelle, dans lequel l'unité de gestion de l'énergie est configurée pour générer le signal de limitation de l'énergie sur la base de la consommation d'énergie totale actuelle.

9. Le système de gestion des installations selon la revendication 8, dans lequel l'unité de gestion de l'énergie est configurée pour lancer des déclassements dynamiques des au moins deux chauffe-eau instantanés en envoyant le signal de limitation de puissance, qui spécifie une valeur de sortie maximale dynamique, lorsque ladite consommation de courant totale de l'objet (35, 36) dépasse une consommation de puissance maximale totale spécifiée.

10. Le système de gestion des installations selon la revendication 7, dans lequel les informations de fonctionnement actuelles comprennent un nombre de chauffe-eau instantanés fonctionnant simultanément parmi les au moins deux chauffe-eau instantanés, dans lequel l'unité de gestion de l'énergie est configurée pour générer le signal de limitation de puissance sur la base du nombre de chauffe-eau instantanés fonctionnant simultanément parmi les au moins deux chauffe-eau instantanés.

11. Le Le système de gestion des installations selon la revendication 10, dans lequel l'unité de gestion de l'énergie est configurée pour lancer des déclassements dynamiques des au moins deux chauffe-eau instantanés en envoyant le signal de limitation de puissance, qui spécifie une valeur de sortie maximale dynamique, lorsque ledit nombre de chauffe-eau instantanés fonctionnant simultanément est supérieur à un nombre maximal spécifié de chauffe-eau instantanés fonctionnant simultanément

12. Système de gestion des installations selon la revendication 7, dans lequel l'unité de gestion de l'énergie est basée sur l'informatique en nuage ou sur un serveur.

13. Méthode de commande d'un chauffe-eau instantané (0, 31) comportant une unité de chauffage avec un élément chauffant configuré pour chauffer l'eau circulant dans l'unité de chauffage et une unité de commande (7, 33) configurée pour commander le chauffe-eau instantané (0, 31), la méthode étant **caractérisée par** les étapes suivantes :
- réception d'un signal de limitation de puissance d'un système de gestion d'installation externe et
- commander une puissance de chauffage de l'élément chauffant en fonction du signal de limitation de puissance.

14. Méthode d'exploitation d'un système de gestion des installations pour contrôler au moins deux chauffe-eau instantanés d'un objet (35, 36), la méthode étant **caractérisée par** les étapes suivantes :
- déterminer les informations de fonctionnement actuelles d'au moins deux chauffe-eau instantanés de l'objet (35, 36),
- générer un signal de limitation de puissance en fonction des informations de fonctionnement actuelles et
- envoyer le signal de limitation de puissance aux unités de commande (7, 33) des au moins deux chauffe-eau instantanés pour contrôler les puissances de chauffage des éléments chauffants des au moins deux chauffe-eau instantanés en fonction des informations de fonctionnement actuelles des au moins deux chauffe-eau instantanés.
